(19) Europäisches Patentamt
European Patent Office
Office européen des brevets

(11) EP 1 037 895 B1

(12) FASCICULE DE BREVET EUROPEEN

(45) Date de publication et mention de la délivrance du brevet: **03.03.2004 Bulletin 2004/10**

(21) Numéro de dépôt: **98959936.0**

(22) Date de dépôt: **09.12.1998**

(51) Int Cl.[7]: **C07F 7/12**, C07F 7/20, C07F 7/16, F25J 1/00

(86) Numéro de dépôt international: **PCT/FR1998/002672**

(87) Numéro de publication internationale: **WO 1999/031111 (24.06.1999 Gazette 1999/25)**

# (54) PREPARATION D'ALKYLMONOHYDROGENOHALOGENOSILANES PAR REDISTRIBUTION PUIS DISTILLATION, ET DISPOSITIF

HERSTELLUNG VON ALKYLMONOHYDROGENHALOGENSILANEN DURCH REDISTRIBUTION UND DESTILLATION

PREPARATION OF ALKYLMONOHYDROGENOHALOGENOSILANES BY REDISTRIBUTION FOLLOWED BY DISTILLATION AND ASSOCIATED DEVICE

(84) Etats contractants désignés: **DE FR GB**

(30) Priorité: **12.12.1997 FR 9716047**

(43) Date de publication de la demande: **27.09.2000 Bulletin 2000/39**

(73) Titulaire: **RHODIA CHIMIE**
**92408 Courbevoie Cédex (FR)**

(72) Inventeurs:
- **CHARRIN, Jean-Jacques**
  **F-69003 Lyon (FR)**
- **COLIN, Pascale**
  **F-69680 Chassieu (FR)**
- **GUINAMARD, Raphael**
  **F-69350 La Mulatière (FR)**
- **IGERSHEIM, Françoise**
  **F-69003 Lyon (FR)**
- **MARGERIAT, Gilbert**
  **F-38150 Ville sous Anjou (FR)**

(74) Mandataire: **Trolliet, Maurice et al**
**Rhodia Services,**
**Direction de la Propriété Industrielle,**
**40, rue de la Haie-Coq**
**93306 Aubervilliers Cedex (FR)**

(56) Documents cités:
**FR-A- 2 119 477**
**US-A- 4 349 417**
**US-A- 4 645 570**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 037 895 B1

## Description

La présente invention concerne l'obtention d'alkyles monohydrogénosilanes, qui sont des matières premières particulièrement prisées en chimie organosilicique. Plus précisément, l'invention est relative à la séparation de ces alkylmonohydrogénohalogénosilanes (AHHS) au sein de mélanges complexes obtenus à l'issue de réactions de double échange (ou de redistribution) de substituants alkyles et halogènes entre des silanes halogénés issus ou non de la synthèse directe, l'un au moins de ces silanes étant un hydrosilane. Cette séparation est réalisée par distillation et la présente invention est plus spécifiquement un perfectionnement de cette étape.

Sans que cela ne soit limitatif, la présente invention vise tout spécialement à purifier un dialkylhydrogénochlorosilane produit par redistribution à partir d'un alkylhydrogénosilane chloré et d'un alkylsilane éventuellement chloré. Ce mono ou dialkylhydrogénochlorosilané est un agent de synthèse particulièrement apprécié dans des applications très nombreuses et variées, par exemple, pour la préparation de monomères organosiliciques ou de composés de base plus condensés.

Les produits de départ de cette redistribution sont obtenus par synthèse directe. Cette technique consiste à faire réagir du chlorure d'alkyle avec du silicium, en présence d'un catalyseur au cuivre, pour former des alkylchlorosilanes. Le principal produit de cette synthèse est le dialkyldichlorosilane. Les autres co-produits sont : le monoalkylhydrogénodichlorosilane, le dialkylhydrogénochlorosilane, le trialkylchloro-silane, l'alkyltrichlorosilane.
On aurait pu imaginer isoler par distillation des mono et dialkylhydrogénochlorosilanes à partir du mélange réactionnel produit par synthèse directe. Mais, dans la mesure où ce mono et ce dialkylhydrogénochlorosilane sont des co-produits minoritaires de la synthèse directe, il est clair que cette voie d'obtention n'est pas intéressante.

Il s'ensuit que pour produire des mono et dialkylchlorosilanes (e.g. $Me_2HSiCl$), on préfère - conformément à la présente invention - récupérer ces produits à partir du mélange brut provenant de la redistribution entre un alkylhydrogénodichlorosilane et un trialkylchlorosilane ou entre un alkylhydrogénodichlorosilane et un tétralkylsilane.
La redistribution entre les substituants alkyles, chlore et hydrogène des siliciums s'effectue en présence de catalyseurs tels que les acides de Lewis.
Dans tout le présent exposé Me désigne le radical monovalent $CH_3$.
Le brevet français FR-A-2 119 477 illustre bien cette technique de préparation de dialkylhydrogénochlorosilanes par redistribution. Le procédé divulgué dans ce document consiste à faire réagir du méthylhydrogénodichlorosilane et du triméthylchlorosilane, dans un rapport molaire $MeHSiCl_2$ / $Me_3SiCl$ de l'ordre de 0,5 et en présence d'un catalyseur formé par de l'$AlCl_3$.
Le mélange réactionnel est placé dans un réacteur, sous une pression autogène de 3 à $5.10^5$ Pa. La réaction se déroule pendant plusieurs heures à une température comprise entre 85 et 174° C. Cette redistribution conduit au $Me_2HSiCl$ ainsi qu'à de nombreux sous-produits. Au terme de la distillation, il apparaît que le rendement de séparation de $Me_2HSiCl$ est anormalement bas, puisqu'il culmine environ à 71 %. Il doit être considéré que de tels résultats ne sont pas satisfaisants sur le plan de la rentabilité industrielle.

Pour perfectionner cet état de la technique, il a été proposé par la déposante dans la demande de brevet français non encore publiée N° 96 07 569 du 12 Juin 1996, de mettre en oeuvre une inhibition du catalyseur de redistribution, dès lors qu'il a rempli son rôle dans la réaction considérée. Cette disposition permet de diminuer, voire même de supprimer un phénomène parasite induit par le catalyseur $AlCl_3$ au cours de la distillation à savoir la dismutation du dialkyl(méthyl)hydrogénosilane chloré, que l'on cherche à purifier. Il est clair qu'un tel phénomène de dismutation est tout à fait préjudiciable au rendement en $Me_2HSiCl$.
Les inhibiteurs proposés dans ce perfectionnement sont des polyorganosiloxanes ou des (poly)silanes qui se présentent sous forme fluide ou sous forme de résine, et qui sont éventuellement alcoxylés. Le ratio molaire *métal du catalyseur* / *oxygène de l'inhibiteur* est choisi dans une plage de valeurs inférieures à 0,9.
Ces améliorations ont permis d'accroître les rendements en dialkylhydrogénochlorosilane, de manière significative. On obtient, ainsi en fin de redistribution, un distillat constitué par un mélange de produits de redistribution, riche en dialkylhydrogénohalogénosilane, (e.g. $Me_2HSiCl$), puisque la dismutation parasite a été éradiquée.
Mais lorsque l'on cherche à isoler les (ou l') alkylhydrogénohalogénosilane du brut de redistribution par distillation, on constate une perte substantielle en AHHS (e.g. $Me_2HSiCl$).

Confrontée à ce problème technique de perte de mono ou dialkylhydrogénochlorosilanes lors de la distillation, la demanderesse s'est fixée pour objectif essentiel d'y remédier.

Un autre objectif essentiel de la présente invention est de proposer un procédé de préparation d'alkylmonohydrogénohalosilanes (e.g. $Me_2HSiCl$ ou $MeHSiCl_2$) qui résolve le problème sus-visé et qui soit particulièrement simple à mettre en oeuvre et économique.

Un autre objectif essentiel de l'invention est de fournir un procédé de préparation d'alkylmonohydrogénohalosilanes (e.g. $Me_2HSiCl$ ou $MeHSiCl_2$) qui résolve le problème sus-visé, qui soit tel que défini supra et qui permette en particulier d'obtenir ces produits à de hauts niveau de pureté.

Pour pouvoir atteindre ces objectifs, parmi d'autres, la demanderesse a eu le mérite de mettre en évidence,

un problème spécifique à la mise en oeuvre du procédé de préparation d'alkylmonohydrogénochlorosilanes, et plus particulièrement encore, à la phase de distillation propre à ce procédé. La Demanderesse a pu en effet montrer que les colonnes de distillation peuvent être le siège de réactions indésirables de dismutation des alkylmonohydrogénochlorosilanes, du fait de la présence de traces de produits contenant de l'aluminium pouvant être du chlorure d'aluminium et/ou des organoaluminiques et/ou des silicoaluminiques et/ou des organosilicoaluminiques. Ces traces de produits contenant de l'aluminium (e.g. $AlCl_3$) promeuvent la transformation des produits de redistribution en sous-produits du type organohydrogénosilanes et organosilanes éventuellement chlorés. C'est ainsi que, par exemple, $Me_2HSiCl$ est converti en $Me_2SiH_2$ et en $Me_2SiCl_2$, du fait de cette dismutation parasite. Il est clair que cette dernière perturbe gravement cette phase de séparation du procédé de préparation d'organohydrogéno-halogénosilanes (AHHS).

Outre la mise à jour du problème technique, la démarche inventive de la demanderesse s'est complétée et enrichie par la mise au point de dispositions consistant à choisir les variables de température idoines et à désactiver les composés présents dans le circuit de distillation avec les AHHS et susceptibles de jouer le rôle de catalyseurs de dismutation de ces derniers. Il s'ensuit que la présente invention concerne un procédé industriel et continu de préparation d'alkylmonohydrogénohalogénosilanes (AHHS) susceptibles d'être sujets à une dismutation catalysée par au moins un acide de Lewis,

ce procédé étant du type de ceux comprenant les étapes essentielles suivantes :

- a - redistribution entre au moins un premier composé de Formule (1) : $(R)_a (H)_b SiX_{4-a-b}$ et au moins un deuxième composé de Formule (2) : $(R')_c SiX_{4-c}$, (1) et (2) étant des formules dans lesquelles :

  * $a = 0, 1, 2, 3$ ; $b = 1, 2, 3$ ; $c = 1, 2, 3, 4$ et $a + b \leq 3$ ;
  * R, R' sont des radicaux identiques et/ou différents entre eux et choisis parmi les alkyles et/ou aryles - de préférence méthyle, éthyle, propyle, phényle - ;
  * les substituants X étant identiques ou différents entre eux et correspondant à un halogène, de préférence Cl, avec la condition selon laquelle au moins un atome X est présent dans au moins un des deux composés de formules (1) (2) ; ladite redistribution se déroulant en présence d'un catalyseur choisi parmi les acides de lewis de préférence parmi les halogénures métalliques et/ou les borates, et plus préférentiellement encore parmi le groupe comprenant : $AlCl_3$, $ZrCl_4$, $KAlCl_4$, CuCl, $H_3BO_3$ et $BF_3$ ;

- b - introduction dans le milieu réactionnel d'au moins un inhibiteur du catalyseur de redistribution ;
- c - séparation et recueil, de préférence par distillation, des alkylmonohydrogénosilanes formés dans le mélange brut réactionnel de redistribution - a - ;

caractérisé

⮝ en ce que dans le cadre de l'étape - c - on soumet le mélange brut réactionnel à un traitement de distillation faisant intervenir au moins une colonne de distillation,

⮝ et en ce que l'on fait en sorte que, au moins dans une partie du circuit de distillation, les AHHS visés soient en présence d'au moins un inhibiteur de tout produit susceptible de se comporter comme un catalyseur de redistribution vis-à-vis desdits AHHS.

Le souci de l'inhibition constante des composés catalyseurs de dismutation dans le circuit de distillation permet d'obtenir en fin de distillation les AHHS visés sous forme extrêmement pure.

La distillation au coeur du procédé selon l'invention peut être exécutée selon un mode discontinu ou continu, à l'aide d'une ou plusieurs colonnes de distillation (train de colonnes). En pratique industrielle, on privilégie l'utilisation d'un train de colonnes.

Le train de colonnes de distillation mis en oeuvre dans une étape - $c_1$ - du procédé selon l'invention comprend au moins deux colonnes (I, II, ... N), de préférence au moins trois colonnes.

Pour assurer la présence d'inhibiteurs dans tout le circuit de distillation, on procède conformément à l'invention, à au moins une injection ou incorporation d'inhibiteurs dans le circuit. Cette opération que l'on référencera - $c_2$ - dans le présent exposé, est, avantageusement, effectuée comme indiqué ci-après :

. (i) → en injectant un fluide (de préférence liquide) contenant l'inhibiteur,

  Δ d'une part, au moins dans la première colonne (I) du train de distillation, à contre-courant par rapport au fluide vapeur contenant les AHHS,

  Δ et d'autre part, dans le fluide d'alimentation de la deuxième colonne (II);

. (ii) → et/ou en mélangeant l'inhibiteur au fluide d'alimentation d'au moins l'une des colonnes (II à N) du train - de préférence de la colonne (II).

Conformément à l'invention, la variante (i) est tout spécialement retenue en pratique.

Selon une disposition préférée de l'invention, l'étape - $c_2$ - est réalisée en mélangeant le fluide comprenant les AHHS visés au condensat ($D_I$) produit et recueilli en tête de colonne (I) et en prévoyant le reflux $R_I$ d'au moins une partie de ce condensat dans cette colonne (I) ;

le taux de reflux $r_I = R_I/D_I$ avec $R_I$ = reflux en tête de colonne (I) et $D_I$ = distillat en tête de colonne (I), étant de préférence ajusté entre 0,5 et 3, de préférence entre 1,5 et 2,5 et plus préférentiellement encore à une valeur de l'ordre de 2.

La colonne I est destinée à l'équeutage du fluide à distiller, c'est-à-dire à l'élimination du catalyseur de redistribution (e.g. $AlCl_3$) et de son inhibiteur (e.g. décaméthylpentasiloxane).

La colonne II est destinée à la séparation par étêtage des composés les plus légers du mélange brut réactionnel, c'est-à-dire par exemple des alkyldihydrogénohalogéno(chloro)silanes $MeH_2SiCl$ et $Me_2H_2Si$.

La colonne III est destinée à l'isolement final par équeutage des alkylmonohydrogénosilanes visés (e. g. $Me_2HSiCl$). Le culot de cette colonne III contient des alkylchlorosilanes (e.g. $Me_3SiCl$ et $Me_2$, $SiCl_2$).

Les AHHS que l'on cherche à purifier, le mélange complexe duquel ils proviennent et le matériel utilisé, seront déterminants pour l'établissement de la procédure de distillation (nombre d'étages théoriques, taux de reflux, températures et pressions en pied et en tête de colonne, point d'alimentation).

Suivant des modalités préférées du procédé selon l'invention, on alimente la colonne (I) avec le mélange brut réactionnel en ayant pris soin de fixer les paramètres pressions ($P_{pI}$, $P_{tI}$) et températures ($\theta_{pI}$, $\theta_{tI}$) de pied et de tête de colonne, nombre $n_I$ de plateaux et taux de reflux $r_I$, de telle sorte que l'on récupère en tête de colonne (I) une coupe de distillation comprenant l'AHHS visé.

On condense ensuite cette coupe en un liquide que l'on fractionne en un reflux $R_I$ et en un distillat $D_I$.

On incorpore l'inhibiteur selon la variante (i) définie ci-dessus, avant ou après, de préférence avant, la dérivation séparant d'une part $D_I$ et, d'autre part $R_I$.

Il s'ensuit qu'une partie de l'inhibiteur reflue dans la colonne (II) par l'intermédiaire de $R_I$ et il est particulièrement surprenant de constater que cette partie d'inhibiteur, somme toute mineure, qui reflue, suffit pourtant à annihiler la dismutation parasite.

Le taux de reflux $r_I$ du condensat en tête de première colonne (I) est tel que le reflux $R_I$ représente de 60 à 80 % en volume, de préférence 70 à 75 % en volume de la quantité totale de condensat produit, contre 40 à 20 % en volume de préférence 30 à 25 % pour la fraction $D_I$ soutirée et amenée dans la colonne (II) suivante.

L'alimentation de la colonne (II) avec $D_I$ est assortie du choix des paramètres de distillation, à savoir : pressions ($P_{pII}$, $P_{tII}$) et températures ($\theta_{pII}$, $\theta_{tII}$) de pied et tête de colonne, nombre $n_{II}$ de plateaux et taux de reflux $r_{II}$, de manière à produire et recueillir :

➢ d'une part, en tête de colonne (II), une coupe de distillation formant le distillat ($D_{II}$) et comprenant des alkylhydrogénohalogénosilanes et des alkylsilanes de points d'ébullition inférieurs à celui de l'AHHS visé,

➢ et d'autre part, en pied de colonne (II) une coupe de distillation $P_{II}$ comprenant l'AHHS visé.

Avantageusement, en pratique, on condense la presque totalité du fluide gazeux produit en tête de colonne (II), à l'exception des légers, (e.g. $MeH_2SiCl$, $Me_2H_2Si$). Le gaz de légers est évacué du circuit de distillation pour être valorisé ou brulé. Le condensat liquide formant le reste de $D_{II}$ est reflué en tout ou partie, de préférence en totalité, en tête de colonne II.

Conformément à l'invention le pied $P_{II}$ est soutiré et acheminé au point d'alimentation de la colonne (III). On a pris soin par ailleurs de fixer les paramètres pressions ($P_{pIII}$ ; $P_{tIII}$) et températures ($\theta_{pIII}$, $\theta_{tIII}$) de pied et de tête de colonne, nombre $n_{III}$ de plateaux et taux de reflux $r_{III}$, de manière à produire et recueillir :

⇨ d'une part, en tête de colonne, un distillat $D_{III}$ essentiellement constitué par l'AHHS visé,

⇨ d'autre part, en pied de colonne, une coupe de distillation formant le pied $P_{III}$ comprenant des alkylhydrogénohalogénosilanes et des alkylhalogénosilanes de points d'ébullition supérieurs ou égaux à celui de l'AHHS visé.

En pratique, le distillat $D_{III}$ est, de préférence, condensé et les éventuelles impuretés encore présentes (e.g. $Me_2H_2$) peuvent, le cas échéant être évacuées sous forme gazeuse.

Outre les paramètres de distillation, le choix de l'inhibiteur est également un élément important de l'invention. Ainsi, les inhibiteurs préférés sont :

- les polyorganosiloxanes (POS) cycliques comportant de 4 à 10 atomes de Si, l'octaméthyltétrasiloxane ($D_4$) et le

décaméthylpentasiloxane ($D_5$) étant préférés ;

- les POS linéaires ou ramifiés, ayant de 2 à 100 atomes de silicium hydroxylés ou non, et plus préférentiellement encore parmi les polydiméthylsiloxanes de viscosité 50 mPa.s. ;
- les résines POS éventuellement alcoxylées,
- les silanes éventuellement alcoxylés,
- des alcools monofonctionnels ou polyfonctionnels (e.g. éthanol),
- des cétones (e.g. acétone),
- et leurs mélanges.

Plus précisément, dès lors qu'il s'agit d'un composé silicone l'inhibiteur peut être :

(i) un POS linéaire ou sensiblement linéaire et constitué de motifs de formule (4), terminé à l'une des extrémités des chaînes par un motif de formule (5) et à l'autre extrémité par un motif de formule (6),
(2i) un POS cyclique et constitué par des motifs de formule (4),
(3 i) un mélange de plusieurs espèces (i) ou (2i) entre elles,
(4i) un mélange d'une ou plusieurs espèce(s) (i) avec une ou plusieurs espèce(s) (2i),

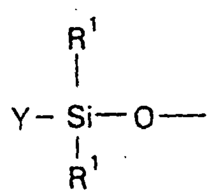
(5)

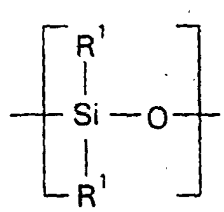
(4)

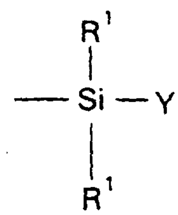
(6)

formules dans lesquelles :

- les symboles $R^1$ sont semblables ou différents et représentent chacun un radical alkyle linéaire ou ramifié en $C_1$-$C_8$, éventuellement substitué par un ou des halogène(s), comme par exemple méthyle, éthyle, propyle, octyle, 3,3,3-trifluoropropyle ; un radical cycloalkyle en $C_5$-$C_8$, comme par exemple cyclohexyle, cycloheptyle ; un radical aryle en $C_6$-$C_{12}$ ou aralkyle ayant une partie aryle en $C_6$-$C_{12}$ et une partie alkyle en $C_1$-$C_4$, éventuellement substitué sur la partie aromatique par un ou plusieurs halogène(s), alkyle(s) en $C_1$-$C_3$ et/ou alkoxy en $C_1$-$C_3$, comme par exemple phényle, xylyle, tolyle, benzyle, phényléthyle, chlorophényle, dichlorophényle ;
- les symboles Y sont semblables ou différents et représentent chacun : soit un radical $R^1$, soit un radical $OR^2$ où $R^2$ est un atome d'hydrogène ou un radical alkyle linéaire ou ramifié en $C_1$-$C_3$.

Par POS linéaires (i), on entend des POS ne présentant pas plus de 3 % de motifs autres que les motifs de formules (4), (5) et (6), par exemple des motifs de formules $R^1SiO_{3/2}$ (T) et/ou $SiO_2$ (Q), les % indiqués expriment le nombre de motifs T et/ou Q pour 100 atomes de silicium.
De préférence, le composé silicone inhibiteur consiste dans un fluide de type (i), (2i), (3i) ou (4i) ayant une viscosité à 25° C qui est au plus égale à 1000 mPa.s et dont au moins 60 % en nombre des symboles $R^1$ représentent des radicaux méthyles.
Des exemples de composés silicones inhibiteurs qui conviennent bien sont :

- à titre de POS linéaires (i) : les polydiméthylsiloxanes qui sont bloqués à chacune des extrémités de chaîne par un motif triméthylsiloxyle [dans les formules (4), (5) et (6) : $R^1 = Y = CH_3$] ou par un groupe hydroxyle [dans les formules (4), (5) et (6) : $R^1 = CH_3$ et Y = OH] et possèdent une viscosité à 25° C qui est comprise entre 5 et 300 mPa.s ;
- à titre de POS cycliques (2i) : les polydiméthylsiloxanes cycliques présentant de 3 à 9 motifs de formule (4) où $R^1 = CH_3$ ;
- et leurs divers mélanges possibles de type (3i) ou (4i).

Plus précisément encore ces POS sont e.g. :

- POS 1 : huile polydiméthylsiloxane linéaire α,ω-dihydroxylée de viscosité à 25° C égale à 50 mPa.s, de formule :

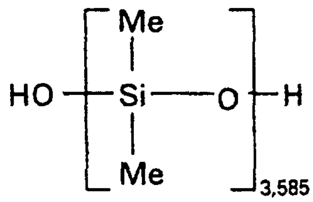

et ayant les caractéristiques suivantes : masse moléculaire calculée = 283,3 g ; nombre d'atomes d'oxygène pour une mole d'huile = 4,59 ;

- POS 2 : huile polydiméthylsiloxane cyclique contenant 4 motifs diméthylsiloxyles, de viscosité à 25° C égale à 2mPa.s et ayant les caractéristiques suivantes :

  masse moléculaire calculée = 296 g ; nombre d'atomes d'oxygène pour une mole d'huile = 4 ;

- POS 3 : huile polydiméthylsiloxane cyclique contenant 5 motifs diméthylsiloxyles, de viscosité à 25° C égale à 2,5 mPa.s et ayant les caractéristiques suivantes :

  masse moléculaire calculée = 370 g ; nombre d'atome d'oxygène pour une mole d'huile = 5.

Pour définir plus en détail, les autres composés à base de silicium utilisables comme inhibiteurs, on ajoutera ceux choisi parmi :

(i) un silane de formule :

$$(R^o)_e\ Si(OR^2)_{4e} \qquad (7)$$

dans laquelle

- les symboles $R^0$ sont semblables ou différents et représentent chacun : un atome d'hydrogène ; un radical alkyle linéaire ou ramifié en $C_1$-$C_8$, éventuellement substitué par un ou des halogène(s) ; un radical cycloalkyle en $C_5$-$C_8$ ; un radical aryle en $C_6$-$C_{12}$ ou aralkyle ayant une partie aryle en $C_6$-$C_{12}$ et une partie alkyle en $C_1$-$C_4$, éventuellement substitué sur la partie aromatique par un ou plusieurs halogène(s), alkyle(s) en $C_1$-$C_3$ et/ou alkoxy en $C_1$-$C_3$ ;
- les symboles $R^2$ sont semblables ou différents et représentent chacun : un radical alkyle linéaire ou ramifié en $C_1$-$C_4$ ; un radical aryle en $C_6$-$C_{12}$ ;
- e est 0, 1, 2 ou 3 ;

(2i) une résine silicone ayant une viscosité à 25° C au plus égale à 5 000 mPa.s et présentant les particularités suivantes :

- elle possède dans sa structure des motifs choisis parmi ceux de formules $(R^3)_3\ SiO_{0,5}$(M), $(R^3)_2SiO$(D), $R^3SiO_{1,5}$ (T) et $SiO_2$ (Q), l'un au moins de ces motifs étant un motif T ou un motif Q, formules dans lesquelles les symboles $R^3$, semblables ou différents, possèdent principalement les définitions données ci-avant à propos des symboles $R^0$ ;
- les proportions des motifs T et/ou Q, exprimées par le nombre de motifs T etou Q pour 100 atomes de silicium, sont supérieures à 10 % ;
- elle possède encore par molécule des groupes terminaux -$OR^4$ portés par des atomes de silicium des motifs M, D et/ou T où
  - les symboles $R^4$, semblables ou différents, représentent chacun un atome d'hydrogène, un radical alkyle linéaire ou ramifié en $C_1$-$C_4$ ou un radical aryle en $C_6$-$C_{12}$,
  - les proportions des extrémités -$OR^4$, exprimées par le nombre moyen de ces extrémités pour 1 atome de silicium, varient de 0,2 à 3.

En particulier, ces silicones inhibiteurs peuvent être :

- des alkoxysilanes (i) de formule (4) dans laquelle :

  - les symboles $R^a$, identiques, représentent chacun un radical alkyle linéaire ou ramifié en $C_1$-$C_4$ ou un radical phényle ;
  - les symboles $R^2$, identiques, représentent chacun un radical alkyle linéaire ou ramifié en $C_1$-$C_3$ ;
  - e = 1 ou 2 ;

Ces alcoxysilanes (i) sont par exemple :

$MeSi(OMe)_3$ $C_6H_5Si(OMe)_3$ $(C_6H_5)_2Si(OMe)_2$
$MeSi(OC_2H_5)_3$ $C_6H_5Si(OC_2H_5)_3$
$(C_6H_5)_2Si(OC_2H_5)_2$

- des résines (2i) : les résines ayant une viscosité à 25° C au plus égales à 1000 mPa.s de type MQ, MDQ, TD et MDT dans la structure desquelles :

  - les symboles $R^3$ des motifs M, D et T sont semblables ou différents et représentent chacun un radical alkyle linéaire en $C_1$-$C_4$ ;
  - les proportions des motifs T et/ou Q sont supérieures à 30 % ;
  - il y a des groupes terminaux $-OR^4$ où le symbole $R^4$ représente un atome d'hydrogène ou un radical alkyle linéaire en $C_1$-$C_2$ et où les proportions desdites extrémités varient de 0,3 à 2.

Ces résines (2i) sont e.g. :

des résines de type TD dans la structure desquelles :

- les symboles $R^3$ des motifs D sont des radicaux méthyles, tandis que les symboles $R^3$ des motifs T sont des radicaux n-propyles ;
- les proportions des motifs T, exprimées par le nombre de motifs T pour 100 atomes de silicium, de situent dans l'intervalle allant de 40 à 65 % et celles des motifs D, exprimées par le nombre de motifs D pour 100 atomes de silicium, se situent dans l'intervalle allant de 60 à 35 % ;
- les groupes terminaux $-OR^4$, où le symbole $R^4$ représente un radical éthyle, sont portés par des atomes de silicium des motifs D et T et sont présents dans les proportions allant de 0,3 à 0,5.

Sur le plan quantitatif, il est préférable d'incorporer l'inhibiteur dans le circuit de distillation, à raison d'au moins 0,0001 % poids, de préférence à raison d'un pourcentage compris entre 0,0010 et 0,0100 % poids, et plus préférentiellement encore entre 0,0020 et 0,0050 % poids par rapport à la quantité d'AHHS présente dans le mélange brut réactionnel avant distillation.

Selon une autre caractéristique avantageuse de l'invention, on recycle le pied $P_{III}$ de la colonne III, en l'incorporant dans le flux d'alimentation de la colonne (I).

Dans le cadre du mode préféré du procédé selon l'invention, les AHHS visés sont le diméthylmonohydrogénochlorosilane et/ou le méthylmonohydrogénodichlorosilane et on met en oeuvre trois colonnes de distillation (I, II, III). Pour l'isolement de $Me_2HSiCl$, dans le cadre de ce mode préféré, on choisit les paramètres de distillation suivants :

- **colonne (I) :**

  - pressions (en bars effectifs)
    $0,1 \leq P_{tI} \leq 3$, de préférence $1 \leq P_{tI} \leq 2$
    $0,1 \leq P_{pI} \leq 3$, de préférence $1 \leq P_{pI} \leq 2$.
  - températures (°C)
    $60 \leq \theta_{tI} \leq 120$ ; de préférence $80 \leq \theta_{tI} \leq 100$
    $90 \leq \theta_{pI} \leq 150$ ; de préférence $110 \leq \theta_{pI} \leq 130$.
  - $r_I = 2 \pm 1$
  - $n_I$ = 5 à 15

- **colonne (II) :**

- pressions (en bars effectifs)
  $1 \leq P_{tII} \leq 8$, de préférence $4 \leq P_{tII} \leq 5$
  $1 \leq P_{pII} \leq 8$, de préférence $4 \leq P_{pII} \leq 5$.
- températures (° C)
  $35 \leq \theta_{tII} \leq 85$ ; de préférence $60 \leq \theta_{tII} \leq 70$
  $80 \leq \theta_{pII} \leq 140$ ; de préférence $115 \leq \theta_{pII} \leq 125$.
- $r_{II} = 100 \pm 50$
- $n_{II}$ = 10 à 30

- **colonne (III) :**

- pressions (en bars effectifs)
  $10^{-4} \leq P_{tIII} \leq 1$, de préférence $10^{-3} \leq P_{tIII} \leq 100.10^{-3}$
  $10^{-4} \leq P_{pIII} \leq 1$, de préférence $10^{-3} \leq P_{pII} \leq 100.10^{-3}$.
- températures (° C)
  $35 \leq \theta_{tIII} \leq 57$° C ; de préférence $35 \leq \theta_{tIII} \leq 38$
  $63 \leq \theta_{pIII} \leq 87$° C ; de préférence $63 \leq \theta_{pIII} \leq 66$.
- $r_{III} = 20 \pm 10$
- $n_{III}$ = 30 à 70.

Cette distillation en continu à l'aide d'un train de colonnes I, II, III renvoit à des dispositions de réglage des reflux, des débits, des pressions, des bouilleurs et des condenseurs qui sont classiques pour l'homme de l'art.
En ce qui concerne l'injection d'inhibiteurs dans le circuit, de préférence en tête de colonne (I), les débits mis en oeuvre dépendent évidemment de la dose d'inhibiteur que l'on souhaite fixer dans le fluide condensé émanant de la colonne (I) et alimentant la deuxième. A titre d'exemples, pour un débit en sortie de première colonne de l'ordre de 1 000 g/h, le débit d'injection d'inhibiteur est compris entre 0,1 et 5 g/h, de préférence entre 0,4 et 1 g/h.
Le procédé selon l'invention permet ainsi d'obtenir des mono ou dialkylhydrogénochlorosilanes à l'échelle industrielle, avec des puretés supérieures ou égales à 90 %, de préférence à 99 %.
Cela en fait un procédé particulièrement attractif pour la production industrielle et économique de mono ou de diméthylhydrogénochlorosilanes.
Selon un autre de ces aspects, la présente invention concerne un dispositif pour la mise en oeuvre du procédé tel que défini ci-dessus. Ce dispositif est caractérisé

→ en ce qu'il comprend au moins trois colonnes de distillation (I, II, III),

  Δ la première étant destinée à l'équeutage du catalyseur de redistribution et de son inhibiteur,
  Δ la deuxième étant destinée à l'étêtage des alkyldihydrogénohalogénosilanes ;
  Δ et la troisième à la séparation entre l'AHHS visé et les autres produits encore présents dans le flux de distillation entrant,

→ et en ce que ces colonnes sont équipées de moyens d'incorporation d'au moins un inhibiteur actif vis-à-vis de produits susceptibles de catalyser des réactions parasites de transformation de l'AHHS visé, en d'autres sous-produits indésirables,

ces moyens d'incorporation étant de préférence des moyens d'adduction d'inhibiteurs, avantageusement, dans le condensat produit en tête de colonne I.
L'invention sera mieux comprise à la lumière des exemples qui suivent et qui décrivent un mode de réalisation préféré du dispositif selon l'invention et un mode préféré de mise en oeuvre du procédé.
La description plus détaillée du dispositif selon l'invention est faite en référence au dessin unique annexé qui représente un schéma synoptique du mode préféré de réalisation du dispositif selon l'invention.
Comme le montre la figure, le dispositif comprend un réacteur **1**, un conteneur **2** intermédiaire interposé entre le réacteur **1** et un train de trois colonnes I, II, III de distillation.
Le réacteur **1** sert de siège à l'étape redistribution (a). L'inhibiteur du catalyseur de redistribution tel que l'$AlCl_3$, est introduit dans le réacteur 1 en fin de réaction. Ce réacteur **1** est relié au conteneur intermédiaire **2** par une canalisation **3,** qui permet de transvaser le contenu du premier dans le deuxième. Le mélange brut réactionnel de redistribution ainsi transvasé peut comprendre certains composés volatils légers tels que par exemple le $Me_2H_2Si$. Ces volatils produits dans le conteneur **2** peuvent être récupérés sous forme gazeuse ou sous forme liquide après condensation, pour être valorisés ou détruits par combustion. Cela correspond sur le dessin à la sortie A.

Le mélange réactionnel présent dans le conteneur intermédiaire **2** peut être acheminé ensuite vers la colonne (I) de distillation, par l'intermédiaire d'une canalisation **4** éventuellement à l'aide d'une pompe **21**. Cette dernière est branchée sur la colonne I au point d'alimentation correspondant au calcul classique de distillation (étages de concentrations et étages d'épuisement).

Cette colonne I tout comme ses homologues II et III, est du type de celles connues par l'homme du métier. Il peut s'agir de colonnes avec des plateaux à cloches, à trous, à clapets ou de tous types de garnissages ordonnés.

S'agissant des colonnes I, II, III du dispositif représenté sur le dessin annexé, il faut observer que chacune d'elles présente un pied et une tête entre lesquels est établi un gradient de température. Chaque tête de colonne (I, II, III) est associée à des moyens de condensation ($5_I$, $5_{II}$, $5_{III}$) pour obtenir des distillats liquides ou gazeux $D_I$, $D_{II}$, $D_{III}$. Chaque pied de colonne (I, II, III) est équipé de bouilleurs ($6_I$, $6_{II}$, $6_{III}$) propres à fournir l'énergie calorifique nécessaire au changement d'états liquide → vapeur au sein de la colonne.

Les condenseurs ($5_I$, $5_{II}$, $5_{III}$) et les bouilleurs ($6_I$, $6_{II}$, $6_{III}$) sont reliés aux colonnes correspondantes par l'intermédiaire de conduits respectivement ($7_I$, $7_{II}$, $7_{III}$) d'une part, et ($8_I$, $8_{II}$, $8_{III}$) d'autre part.

Le condenseur $5_I$ permet la transformation des vapeurs de composés légers de la colonne I en un condensat liquide, recueilli dans un bac **9.**

La colonne I, est également pourvue de moyens **11, 12, 13** d'incorporation d'au moins un inhibiteur, avantageusement le polysiloxane cyclique $D_5$. Ces moyens comprennent un réservoir **11** d'inhibiteur relié, par l'intermédiaire d'un conduit **12,** au bac **9** de recueil des condensats liquides, obtenus à partir de la coupe de distillation d'étêtage de la colonne I. Ce conduit **12** est équipé d'un débit mètre **13** permettant de doser les faibles quantités d'inhibiteur injectées.

Le mélange inhibiteur / condensat liquide d'étêtage qui comprend les composés tels que $MeH_2SiCl$, $Me_2H_2Si$, $Me_2HSiCl$, $MeH_3Si$, $Me_4Si$, $Me_3SiCl$ et $Me_2SiCl_2$ est acheminé à l'aide d'une pompe **14** dans une canalisation **15** vers une dérivation comprenant une branche **16** formant un conduit de reflux $R_I$ et une branche **17** d'alimentation de la colonne II en fluide ou distillat $D_I$.

Le conduit **16** de reflux débouche dans la tête de la colonne I, tandis que le conduit **17** débouche au point d'alimentation de la colonne II choisi de la même façon que celui de la colonne I. Ce conduit **17** est équipé d'une vanne 18 permettant le réglage des flux $R_I$ et $D_I$.

Par exemple, un tiers du flux provenant de la canalisation **15** est véhiculé par la canalisation **17** et les deux-tiers restants par le conduit de reflux **16.**

Le pied $P_I$ de la colonne I est évacué par une canalisation **19** hors du circuit de distillation. Les produits recueillis à cette sortie $P_I$ sont, par exemple, le catalyseur de redistribution (e.g. $AlCl_3$), l'inhibiteur, qui peut être un polysiloxane cyclique (tel que le décaméthylpentasiloxane = $D_5$) et les organochlorosilanes les plus lourds comme par exemple $Me_2SiCl_2$.

Les vapeurs condensées en liquide recueillis à la sortie du condenseur $5_{II}$ associé à la tête de la colonne (II), sont reflués par un conduit **20** à la tête de cette colonne II.

Les gaz d'organosilanes légers qui ne sont pas transformés en liquide par le condenseur $5_{II}$ constituent le distillat $D_{II}$ et sont évacués par un conduit **22,** à des fins de valorisation ou de destruction par combustion.

L'étêtage des légers générés par la colonne (II) entraîne corrélativement la production d'un pied $P_{II}$ liquide destiné à alimenter la colonne (III). $P_{II}$ contient, par exemple, du $Me_2HSiCl$, du $MeHSiCl_2$, du $Me_2SiCl_2$ du $Me_3SiCl$.

L'amenée de $P_{II}$ dans la colonne III s'effectue par un conduit **23 -** (avec ou sans pompe, préférentiellement sans pompe) - au niveau d'un point d'alimentation choisi en employant les mêmes méthodes que celles utilisées pour les points d'alimentation des colonnes (I) et (II).

La tête de la colonne (III) est équipée d'une canalisation **24** de recueil du condensat liquide contenant l'AHHS que l'on cherche à purifier. Le condenseur $5_{III}$ est également relié à un conduit **25** d'évacuation des évents. La tête de colonne (III) est par ailleurs équipée d'une canalisation **26** de reflux $R_{III}$ d'AHHS pur ou sensiblement pur.

Le pied de la colonne (III) est, quant à lui, pourvu d'une canalisation **28** de recueil du liquide PIII, qui permet d'acheminer ce dernier vers un poste de valorisation, de récupération ou de destruction des composés récupérés et, qui peuvent être, par exemple, $Me_3SiCl$ et $Me_2SiCl_2$.

Selon une variante de réalisation de ce dispositif, parmi d'autres, les moyens d'injection **11, 12, 13** de l'inhibiteur pourraient être connectés, en complément ou à la place de leur branchement sur la boucle de rétro ou de reflux $R_I$ de la tête de la colonne (I), sur la canalisation **17** d'alimentation de la colonne (II) située en aval de cette boucle de reflux $R_I$.

On peut également selon d'autres variantes introduire l'inhibiteur en tête de colonnes II et/ou III.

La mise en oeuvre du procédé selon l'invention et en particulier de l'étape (c) de distillation qui fait intervenir le train de 3 colonnes de distillation (I à III) est illustré par les différents essais reportés ci-après.

**EXEMPLE**

**1°) - PRODUITS MIS EN OEUVRE**

La synthèse considérée dans les présents exemples est celle de $Me_2HSiCl$ (=AHHS visé) préparé en redistribuant dans une étape (a) $MeHSiCl_2$ et $Me_3SiCl$ en présence de catalyseur acide de Lewis, en l'occurence l'$AlCl_3$. Cette réaction se déroule dans le réacteur 1.

L'inhibiteur mis en oeuvre est une huile polydiméthylsiloxane (PDMS) cyclique contenant 5 motifs diméthylsiloxyles ($D_5$), de viscosité à 25° C = 2,5 mPa.s et ayant les caractéristiques suivantes :

Masse moléculaire calculée = 370 g ; nombre d'atomes d'oxygène pour une molécule d'huile = 5.

**2°) - MATERIEL UTILISE**

Il s'agit du dispositif tel que décrit ci-avant. Les colonnes de distillation continu (I à III) mises en oeuvre, comprennent un garnissage ordonné SULZER - MELLAPACK dont la hauteur correspond au nombre voulu de plateaux théoriques. Les autres équipements condenseurs, bouilleurs, vannes .... sont de type connus.

**3°) - MODE OPERATOIRE DE L'ETAPE (a)**

Dans le réacteur **1** en inox préalablement purgé à l'azote, on charge sous agitation 5490 g de $Me_3SiCl$ et 2900 g $MeHSiCl_2$ pour obtenir un rapport molaire $MeH/Me_3$ égal à 0,5.
Le catalyseur, soit 252 g de chlorure d'aluminium anhydre, est ajouté à ce mélange. Le réacteur est fermé et la pression est ajustée à 10 x $10^5$ Pa avec de l'azote, puis à la pression atmosphérique. L'agitation est assurée par une turbine 4 pales. La vitesse d'agitation est fixée à 100 tours/mn. On chauffe à 100°C, la pression s'établit à 4,5 x $10^5$ Pa. La température est maintenue à 100° C pendant 2 heures. On introduit dans le réacteur 294 g du composé inhibiteur POS en quelques minutes. L'ensemble est maintenu à 100° C pendant ½ h sous agitation, puis le réacteur est refroidi à 20°C. La pression résiduelle de 1,5.$10^5$ Pa est éliminée par dégazage. 8757 g de mélange réactionnel contenant 1313 g de $Me_2HSiCl$ et le catalyseur inactif sont ainsi obtenus.

**4°) ETAPE (c) : DISTILLATION**

Le mélange réactionnel brut comprenant D5 est soutiré du réservoir 2 pour alimenter la colonne (I) selon un débit de 1000 g/h.
Pour le fonctionnement en continu, l'alimentation du réacteur **1** en $Me_3SiCl$, $MeHSiCl_2$, $AlCl_3$, et PDMS cyclique D5 est réalisée de telle sorte qu'il soit possible de produire le mélange réactionnel brut additionné de D5, à raison d'au moins 1000 g/h. Ce mélange ainsi produit est transféré en discontinu dans le réservoir 2.
Le bilan matière (réalisé par chromatographie phase vapeur), à l'entrée de la colonne (I) est le suivant :

- 150 g/h $Me_2HSiCl$ (AHHS visé)
- 380 g/h $Me_2SiCl_2$
- 380 g/h $Me_3SiCl$
- 20 g/h $MeHSiCl_2$
- 41 g/h lourds = $D_5$ + $AlCl_3$
- 29 g/h légers = $Me_2H_2Si$ ; $MeH_2SiCl$ ; $Me_4Si$ et autres légers.

1000 g/h

Les paramètres de distillation pour la colonne (I) sont donnés ci-après :

- températures (°C)
  $\theta_{It}$ = 87,5 $\theta_{Ip}$ = 116
- pressions (en bars effectifs)
  $P_{It}$ = 1,5 $P_{Ip}$ = 1,55
- $n_I$ = 10 (point d'alimentation au 8ème étage théorique à partir du bas)
- $r_I = \frac{R_I}{D_I} = 1,8$

L'énergie calorifique produite par le bouilleur $6_I$ est de : 207 kcal/h.
On introduit en continu 0,7 g/h de $D_5$ dans le réservoir 9. Ces 0,7 g/h se répartissent à raison de 0,45 g/h dans $R_I$ et 0,25 g/h dans $D_I$.

L'analyse de $P_I$ par chromatographie phase vapeur, permet de calculer les débits suivants en pied de colonne I :

- $AlCl_3 + D_5$ 41 g/h
- Me2SiCl2 41 g/h.

$D_I$ qui contient :

- $Me_2HSiCl$ 150 g/h
- $Me_2SiCl_2$ 339 g/h
- $Me_3SiCl$ 380 g/h
- $MeHSiCl_2$ 20 g/h
- Légers 29 g/h
- $D_5$ 0.25 g/h

918,25 g/h

est introduit dans la colonne (II) par le conduit **17**.
Les paramètres de distillation pour cette colonne (II) sont donnés ci-après :

- températures (° C)
  $\theta_{IIt} = 63$ $\theta_{IIt} = 118$
- pressions (en bars effectifs)
  $P_{IIt} = 4,4$ $P_{IIp} = 4,42$
- $n_{II} = 20$ (point d'alimentation au 8ème étage théorique à partir du bas)
- $r_{II} = \frac{R_{II}}{D_{II}}$ = environ 70

L'énergie calorifique produite par le bouilleur 6II est de : 102 kcal/h.
Les analyses de DII et PII par chromatographie phase vapeur, donnent respectivement les résultats suivants :

$D_{II}$ = 29 g/h comprenant essentiellement $MeH_2SiCl$, $Me_2H_2Si$ et d'autres légers.
$P_{II}$ =

- $Me_2HSiCl$ 150 g/h
- $Me_2SiCl_2$ 339 g/h
- $Me_3SiCl$ 380 g/h
- $MeHSiCl_2$ 20 g/h
- $D_5$ 0.25 g/h

889,25 g/h

$D_{II}$ est évacué par l'évent **22** et $P_{II}$ est introduit dans la colonne (III) via le conduit **23**.
Les paramètres de distillation pour cette colonne (III) sont donnés ci-après :

- températures (°C)
  $\theta_{IIIt} = 36$ $\theta_{IIIp} = 63,5$
- pressions (en bars effectifs)
  $P_{IIIt} = 30 \times 10^{-3}$ $P_{IIIp} = 35 \times 10^{-3}$.
- $n_{III} = 48$ (point d'alimentation au 27ème étage théorique à partir du bas)
- $r_{III} = \frac{R_{III}}{D_{III}}$ = environ 20

L'énergie calorifique produite par le bouilleur $6_{III}$ est de : 180 kcal/h.
Les analyses de $D_{III}$ et $P_{III}$ par chromatographie phase vapeur, donnent respectivement les résultats suivants :

$D_{III}$ = 150 g/h de $Me_2HSiCl$ à 99 % de pureté et comprenant principalement $MeHSiCl_2$ comme impureté.
$P_{III}$ =

- $Me_3SiCl$ 380 g/h
- $Me_2SiCl_2$ 339 g/h

- $MeHSiCl_2$ 20 g/h
- $D_5$ <u>0.25 g/h</u>

739,25 g/h

L'évent **25** ne dégage pas ou pratiquement pas de $Me_2H_2$.

**5°) COMPARATIF :**

Distillation - c - sans injection de $D_5$ en tête de colonne (I).
$D_{III}$ = $Me_2HSiCl$ (75 g/h) comportant plus de 1% de $Me_2H_2Si$.
Les évents **22** et **25** laissent échapper des quantités importantes de $Me_2H_2$ produites par la dismutation parasite de $Me_2HSiCl$.
Sans injection de $D_5$, on ne récupère que 50 % du $Me_2HSiCl$ alimentant la distillation, tandis qu'avec l'injection de $D_5$, on en récupère 100 %.

## Revendications

**1.** Procédé de préparation d'alkylmonohydrogénohalogénosilanes (AHHS) susceptibles d'être sujets à une dismutation catalysée par au moins un acide de Lewis,

ce procédé étant du type de ceux comprenant les étapes essentielles suivantes :

- a - redistribution entre au moins un premier composé de Formule (1) : $(R)_a (H)_b SiX_{4-a-b}$ et au moins un deuxième composé de Formule (2) : $(R')_c SiX_{4-c}$, (1) et (2) étant des formules dans lesquelles :

  * $a = 0, 1, 2, 3$ ; $b = 1, 2, 3$ ; $c = 1, 2, 3, 4$ et $a + b \leq 3$ ;
  * R, R' sont des radicaux identiques et/ou différents entre eux et choisis parmi les alkyles et/ou aryles - de préférence méthyle, éthyle, propyle, phényle - ;
  * les substituants X étant identiques ou différents entre eux et correspondant à un halogène, de préférence Cl,

  avec la condition selon laquelle au moins un atome X est présent dans au moins un des deux composés de formules (1) (2) ; ladite redistribution se déroulant en présence d'un catalyseur choisi parmi les acides de lewis de préférence parmi les halogénures métalliques et/ou les borates, et plus préférentiellement encore parmi le groupe comprenant : $AlCl_3$, $ZrCl_4$, $KAlCl_4$, CuCl, $H_3BO_3$ et $BF_3$ ;
- b - introduction dans le milieu réactionnel d'au moins un inhibiteur du catalyseur de redistribution ;
- c - séparation et recueil, de préférence par distillation, desalkylmonohydrogénosilanes formés dans le mélange brut réactionnel de redistribution - a - ;

**caractérisé**

⅄ en ce que dans le cadre de l'étape - c - on soumet le mélange brut réactionnel à un traitement de distillation faisant intervenir au moins une colonne de distillation,
⅄ et en ce que l'on fait en sorte que, au moins dans une partie du circuit de distillation, les AHHS visés soient en présence d'au moins un inhibiteur de tout produit susceptible de se comporter comme un catalyseur de redistribution vis-à-vis desdits AHHS.

**2.** Procédé selon la revendication 1, **caractérisé en ce que** l'étape - c - de distillation consiste essentiellement à :

- $c_1$ - mettre en oeuvre un train d'au moins deux (I, II, ....N) de préférence au moins trois, colonnes de distillation ;
- $c_2$ - assurer la mise en présence du fluide comprenant les AHHS avec l'inhibiteur :

  . (i) → en injectant un fluide (de préférence liquide) contenant l'inhibiteur,

    Δ d'une part, au moins dans la première colonne (I) du train de distillation, à contre-courant par rapport au fluide vapeur contenant les AHHS,
    Δ et d'autre part, dans le fluide d'alimentation de la deuxième colonne (II) ;

. (ii) → et/ou en mélangeant l'inhibiteur au fluide d'alimentation d'au moins l'une des colonnes (II à N) du train - de préférence de la colonne (II); la variante (i) étant tout spécialement retenue en pratique.

**3.** Procédé selon la revendication 2 **caractérisé en ce que**, dans l'étape - $c_2$ - , on assure la mise en présence du fluide comprenant les AHHS visés avec l'inhibiteur, en mélangeant ce dernier au condensat ($D_I$) produit et recueilli en tête de colonne (I) et en prévoyant le reflux $R_I$ d'au moins une partie de ce condensat dans cette colonne (I) ;
le taux de reflux $r_I = R_I/D_I$ avec $R_I$ = reflux en tête de colonne (I) et $D_I$ = distillat en tête de colonne (I), étant de préférence ajusté entre 0,5 et 3, de préférence entre 1,5 et 2,5 et plus préférentiellement encore à une valeur de l'ordre de 1,8.

**4.** Procédé selon l'une quelconque des revendications 1 à 3, **caractérisé**

◊ **en ce que** l'on utilise, pour l'étape - $c_1$ -, un train de trois colonnes de distillation, respectivement :

- une colonne (I) d'équeutage des composés lourds du mélange brut réactionnel,
- une colonne (II) d'étêtage des composés légers du mélange brut réactionnel,
- et une colonne (III) de séparation finale des AHHS ;

◊ et en ce que l'on alimente la colonne (I) avec le mélange brut réactionnel en ayant pris soin de fixer les paramètres pressions ($P_{pI}$, $P_{tI}$) et températures ($\theta_{pI}$, $\theta_{tI}$) de pied et de tête de colonne, nombre $n_I$ de plateaux et taux de reflux $r_I$, de telle sorte que l'on récupère en tête de colonne (I) une coupe de distillation comprenant l'AHHS visé,

◊ en ce que l'on condense cette coupe en un liquide que l'on fractionne en un reflux $R_I$ et en un distillat $D_I$ ;

◊ en ce que l'on alimente la colonne (II) avec $D_I$ en ayant pris soin de fixer les paramètres pressions ($P_{pII}$, $P_{tII}$) et températures ($\theta_{pII}$, $\theta_{tII}$) de pied et tête de colonne, nombre $n_{II}$ de plateaux et taux de reflux $r_{II}$, de manière à produire et recueillir :

  ➢ d'une part, en tête de colonne (II), une coupe de distillation formant le distillat ($D_{II}$) et comprenant des alkylhydrogénohalogénosilanes et des alkylsilanes de points d'ébullition inférieurs à celui de l'AHHS visé.
  ➢ et d'autre part, en pied de colonne (II) une coupe de distillation $P_{II}$ comprenant l'AHHS visé ;

  ◊ et en ce que l'on alimente la colonne (III) avec $P_{II}$ en ayant pris soin de fixer les paramètres pressions ($P_{pIII}$ ; $P_{tIII}$) et températures ($\theta_{pIII}$, $\theta_{tIII}$) de pied et de tête de colonne, nombre $n_{III}$ de plateaux et taux de reflux $r_{III}$, de manière à produire et recueillir :

    ⇨ d'une part, en tête de colonne, un distillat $D_{III}$ essentiellement constitué par l'AHHS visé,
    ⇨ d'autre part, en pied de colonne, une coupe de distillation formant le pied $P_{III}$ comprenant des alkylhydrogénohalogénosilanes et des alkylhalogénosilanes de points d'ébullition supérieurs ou égaux à celui de l'AHHS visé.

**5.** Procédé selon l'une quelconque des revendications 1 à 4, **caractérisé en ce que** l'on choisit l'inhibiteur parmi :

- les polyorganosiloxanes (POS) cycliques comportant de 4 à 10 atomes de Si, l'octaméthyltétrasiloxane ($D_4$) et le décaméthylpentasiloxane ($D_5$) étant préférés.
- les POS linéaires ou ramifiés, ayant de 2 à 100 atomes de silicium hydroxylés ou non, et plus préférentiellement encore parmi les polydiméthylsiloxanes de viscosité 50 mPa.s. et leurs mélanges ;
- les résines POS éventuellement alcoxylées,
- les silanes éventuellement alcoxylés,
- des alcools monofonctionnels ou polyfonctionnels,
- des cétones,
- et leurs mélanges.

**6.** Procédé selon l'une quelconque des revendications 1 à 5, **caractérisé en ce que** l'on incorpore l'inhibiteur à raison d'au moins 0,0001 % poids, de préférence entre 0,0010 et 0,0100 % poids, et plus préférentiellement encore entre 0,0020 et 0,0050 % poids par rapport à la quantité d'AHHS présente dans le mélange brut réactionnel avant distillation.

**7.** Procédé selon l'une quelconque des revendications 1 à 6, **caractérisé en ce que** l'AHHS visé est le diméthylmonohydrogénochlorosilane,
**en ce que** l'on met en oeuvre trois colonnes de distillation (I, II, III).
et **en ce que** l'on choisit les paramètres de distillation suivants :

- **colonne (I) :**

  - pressions (en bars effectifs)
    $0,1 \leq P_{tI} \leq 3$, de préférence $1 \leq P_{tI} \leq 2$
    $0,1 \leq P_{pI} \leq 3$, de préférence $1 \leq P_{pI} \leq 2$.
  - températures (° C)
    $60 \leq \theta_{tI} \leq 120$ ; de préférence $80 \leq \theta_{tI} \leq 100$
    $90 \leq \theta_{pI} \leq 150$ ; de préférence $110 \leq \theta_{pI} \leq 130$.
  - $r_I = 2 \pm 1$
  - $n_I = 5$ à 15

- **colonne (II) ;**

  - pressions (en bars effectifs)
    $1 \leq P_{tII} \leq 8$, de préférence $4 \leq P_{tII} \leq 5$
    $1 \leq P_{pII} \leq 8$, de préférence $4 \leq P_{pII} \leq 5$.
  - températures (° C)
    $30 \leq \theta_{tII} \leq 85$ ; de préférence $60 \leq \theta_{tII} \leq 70$
    $80 \leq \theta_{pII} \leq 140$ ; de préférence $115 \leq \theta_{pII} \leq 125$.
  - $r_{II} = 100 \pm 50$
  - $n_{II} = 10$ à 30

- **colonne (III) :**

  - pressions (en bars effectifs)
    $10^{-4} \leq P_{tIII} \leq 1$, de préférence $10^{-3} \leq P_{tIII} \leq 100.10^{-3}$
    $10^{-4} \leq P_{pIII} \leq 1$, de préférence $10^{-3} \leq P_{pII} \leq 100.10^{-3}$.
  - températures (°C)
    $35 \leq \theta_{tIII} \leq 57°$ C ; de préférence $35 \leq \theta_{tIII} \leq 38$
    $63 \leq \theta_{pIII} \leq 87°$ C ; de préférence $63 \leq \theta_{pIII} \leq 66$.
  - $r_{III} = 20 \pm 10$
  - $n_{III} = 30$ à 70.

**8.** Dispositif pour la mise en oeuvre du procédé selon l'une quelconque des revendications 1 à 7, **caractérisé :**

→ **en ce qu'**il comprend au moins trois colonnes de distillation (I, II, III),

  δ la première étant destinée à l'équeutage, notamment, du catalyseur de redistribution et de son inhibiteur,
  δ la deuxième étant destinée à l'étêtage des alkyldihydrogénohalogénosilanes ;
  δ et la troisième à la séparation entre l'AHHS visé et les autres produits encore présents dans le flux de distillation entrant,

→ et en ce que ces colonnes sont équipées de moyens d'incorporation d'au moins un inhibiteur actif vis-à-vis de produits susceptibles de catalyser des réactions parasites de transformation de l'AHHS visé en d'autres sous-produits indésirables,

ces moyens d'incorporation étant de préférence des moyens d'adduction d'inhibiteurs dans le condensat avantageusement produit en tête de colonne I.

## Patentansprüche

**1.** Verfahren zur Herstellung von Alkylmonohydrogenhalogensilanen (AHHS), die geeignet sind, den Gegenstand einer katalysierten Dismutation durch mindestens eine Lewis-Säure zu bilden,

wobei dieses Verfahren von der Art ist, daß es die folgenden wesentlichen Stufen umfaßt:

a) Redistribution zwischen mindestens einer ersten Verbindung der Formel (1) : $(R)_a (H)_b SiX_{4-a-b}$ und mindestens einer zweiten Verbindung der Formel (2) : $(R')_c SiX_{4-c}$, wobei in den Formeln (1) und (2)

* a = 0, 1, 2, 3 ; b = 1, 2, 3 ; c = 1, 2, 3, 4 und a + b ≤ 3 sind ;
* R, R' untereinander gleiche und/oder verschiedene Reste sind, ausgewählt unter den Alkylen und/oder Arylen, vorzugsweise Methyl, Ethyl, Propyl, Phenyl ;
* die Substituenten X untereinander gleich oder verschieden sind und einem Halogen, vorzugsweise Cl entsprechen, unter der Bedingung, daß mindestens ein Atom X in mindestens einer der beiden Verbindungen (1) (2) anwesend ist; wobei die genannte Redistribution in Anwesenheit eines Katalysators abläuft, ausgewählt unter den LewisSäuren und vorzugsweise den metallischen Halogeniden und/oder den Boraten, und ganz besonders unter denen aus der folgenden Gruppe: $AlCl_3$, $ZrCl_4$, $KAlCl_4$, CuCl, $H_3BO_3$ und $BF_3$ ;

b) Eintragen von mindestens einem Inhibitor des Katalysators für die Redistribution in das Reaktionsmedium ;
c) Abtrennung und Gewinnung, vorzugsweise durch Destillation, der Alkylmonohydrogensilane, die in der rohen Reaktionsmischung der Redistribution a) gebildet wurden ;

**dadurch gekennzeichnet, daß**

» man im Rahmen der Stufe c) die rohe Reaktionsmischung einer Destillationsbehandlung unterzieht, bei der mindestens eine Destillationskolonne eingesetzt wird,
» man in der Weise vorgeht, daß mindestens ein Teil des Kreislaufes der Destillation, die angestrebten AHHS, in die Anwesenheit von mindestens einem Inhibitor für jedes Produkt gebracht werden, das fähig ist, sich wie ein Redistributionskatalysator gegenüber den genannten AHHS zu verhalten.

**2.** Verfahren nach Anspruch 1, **dadurch gekennzeichnet, daß** die Stufe c) der Destillation im wesentlichen besteht in :

$c_1$) Anwendung einer Reihe von mindestens zwei (I, II, ...N), vorzugsweise mindestens drei Destillationskolonnen ;
$c_2$) Absicherung der Anwesenheit des Fluids, das die AHHS enthält, zusammen mit dem Inhibitor;

(i) → indem ein Fluid (vorzugsweise flüssig), das den Inhibitor enthält, eingespritzt wird,

Δ einerseits mindestens in die erste Kolonne (I) der Reihe von Destillationskolonnen, im Gegenstrom in bezug auf das dampfförmige Fluid, das die AHHS enthält, und
Δ andererseits in das Fluid zur Speisung der zweiten Kolonne (II) ;

(ii) → und/oder indem der Inhibitor mit dem Fluid zur Speisung von mindestens einer der Kolonnen (II bis N) der Reihe von Destillationskolonnen, vorzugsweise der Kolonne (II), vermischt wird; wobei in der Praxis ganz speziell die Variante (i) herangezogen wird.

**3.** Verfahren nach Anspruch 2, **dadurch gekennzeichnet, daß** man in der Stufe $c_2$) die Anwesenheit des Fluids, das die angestrebten AHHS enthält, zusammen mit dem Inhibitor absichert, indem man diesen letzteren mit dem Kondensat ($D_I$) vermischt, das am Kopf der Kolonne (I) erzeugt und gewonnen wurde, und indem man den Rückfluß $R_I$ von mindestens einem Teil dieses Kondensates in diese Kolonne (I) vorsieht;
wobei der Rückflußgrad $r_I = R_I/D_I$ mit $R_I$ = Rückfluß am Kopf der Kolonne (I) und $D_I$ = Destillat am Kopf der Kolonne (I) vorzugsweise zwischen 0,5 und 3, noch bevorzugter zwischen 1,5 und 2,5 und ganz besonders bevorzugt auf einen Wert in der Größenordnung von 1,8 eingestellt wird.

**4.** Verfahren nach irgendeinem der Ansprüche 1 bis 3, **dadurch gekennzeichnet, daß** man in der Stufe $c_1$) eine Reihe von drei Destillationskolonnen verwendet, jeweils:

- eine Kolonne (I) zur Beseitigung der schweren Verbindungen aus der rohen Reaktionsmischung,
- eine Kolonne (II) zur Beseitigung der leichten Verbindungen aus der rohen Reaktionsmischung, und
- eine Kolonne (III) zur Endabtrennung der AHHS;

und dadurch, daß man die Kolonne (I) mit der rohen Reaktionsmischung speist, indem man dafür Sorge trägt, die Parameter für die Drücke ($P_{pI}$, $P_{tI}$) und die Temperaturen ($\Theta_{pI}$, $\Theta_{tI}$,) am Fuß und am Kopf der Kolonne, die Anzahl $n_I$ von Böden und den Rückflußgrad $r_I$ in der Weise festzulegen, daß man am Kopf der Kolonne (I) einen Destillationsschnitt gewinnt, der das angestrebte AHHS umfaßt,

und dadurch, daß man diesen Schnitt zu einer Flüssigkeit kondensiert, die man in einen Rückfluß $R_I$ und in ein Destillat $D_I$ fraktioniert;

und dadurch, daß man die Kolonne (II) mit $D_I$ speist, indem man dafür Sorge trägt, die Parameter für die Drücke ($P_{pII}$, $P_{tII}$) und die Temperaturen ($\Theta_{pII}$, $\Theta_{tII}$,) am Fuß und am Kopf der Kolonne, die Anzahl $n_{II}$ von Böden und den Rückflußgrad $r_{II}$ in der Weise festzulegen, daß man erzeugt und gewinnt:

- ➢ einerseits am Kopf der Kolonne (II) einen Destillationsschnitt, der das Destillat ($D_{II}$) bildet und die Alkylhydrogenhalogensilane und die Alkylsilane mit einem Siedepunkt von unter dem des angestrebten AHHS umfaßt, und
- ➢ andererseits am Fuß der Kolonne (II) einen Destillationsschnitt $P_{II}$, der das angestrebte AHHS umfaßt;

und dadurch, daß man die Kolonne (III) mit $P_{II}$ speist, indem man dafür Sorge trägt, die Parameter für die Drücke ($P_{pIII}$, $P_{tIII}$) und die Temperaturen ($\Theta_{pIII}$, $\Theta_{tIII}$,) am Fuß und am Kopf der Kolonne, die Anzahl $n_{III}$ von Böden und den Rückflußgrad $r_{III}$ in der Weise festzulegen, daß man erzeugt und gewinnt:

- ⇒ einerseits am Kopf der Kolonne ein Destillat ($D_{III}$), das im wesentlichen aus dem angestrebten AHHS besteht, und
- ⇒ andererseits am Fuß der Kolonne einen Destillationsschnitt, der den Fuß $P_{III}$ bildet und die Alkylhydrogenhalogensilane und die Alkylhalogensilane mit einem Siedepunkt von über oder gleich dem des angestrebten AHHS umfaßt.

**5.** Verfahren nach irgendeinem der Ansprüche 1 bis 4, **dadurch gekennzeichnet, daß** man den Inhibitor auswählt unter:

- den cyclischen Polyorganosiloxanen (POS) mit 4 bis 10 Si-Atomen, wobei das Octamethyltetrasiloxan ($D_4$) und das Decamethylpentasiloxan ($D_5$) bevorzugt sind;
- den linearen oder verzweigten POS mit 2 bis 100 Si-Atomen, hydroxyliert oder nicht, und ganz besonderes bevorzugt unter ihnen die Polydimethylsiloxane mit einer Viskosität von 50 mPa.s und ihre Mischungen;
- den POS-Harzen, gegebenenfalls alkoxyliert,
- den Silanen, gegebenenfalls alkoxyliert,
- den monofunktionellen oder polyfunktionellen Alkoholen,
- den Ketonen und
- ihren Mischungen.

**6.** Verfahren nach irgendeinem der Ansprüche 1 bis 5, **dadurch gekennzeichnet, daß** man den Inhibitor in einem Verhältnis von mindestens 0,0001 Gew.-%, vorzugsweise zwischen 0,0010 Gew.-% und 0,0100 Gew.-% und ganz besonders bevorzugt zwischen 0,0020 Gew.-% und 0,0050 Gew.-% einträgt, bezogen auf die Menge von AHHS, die in der rohen Reaktionsmischung vor der Destillation anwesend ist.

**7.** Verfahren nach irgendeinem der Ansprüche 1 bis 6, **dadurch gekennzeichnet, daß** das angestrebte AHHS das Dimethylmonohydrogenchlorsilan ist, dadurch, daß man drei Destillationskolonnen (I, II, III) verwendet und dadurch, daß man die folgenden Parameter für die Destillation auswählt:

- **Kolonne (I):**
  - Drücke (in bar effektiv)
    $0{,}1 \le P_{tI} \le 3$, vorzugsweise $1 \le P_{tI} \le 2$
    $0{,}1 \le P_{pI} \le 3$, vorzugsweise $1 \le P_{pI} \le 2$
  - Temperaturen (°C)
    $60 \le \Theta_{tI} \le 120$, vorzugsweise $80 \le \Theta_{tI} \le 100$
    $90 \le \Theta_{pI} \le 150$, vorzugsweise $110 \le \Theta_{pI} \le 130$
  - $r_I = 2 \pm 1$
  - $n_I$ = 5 bis 15

- **Kolonne (II):**

  - Drücke (in bar effektiv)
    $1 \leq P_{tII} \leq 8$, vorzugsweise $4 \leq P_{tII} \leq 5$
    $1 \leq P_{pII} \leq 8$, vorzugsweise $4 \leq P_{pII} \leq 5$
  - Temperaturen (°C)
    $30 \leq \Theta_{tII} \leq 85$, vorzugsweise $60 \leq \Theta_{tII} \leq 70$
    $80 \leq \Theta_{pII} \leq 140$, vorzugsweise $115 \leq \Theta_{pII} \leq 125$
  - $r_{II} = 100 \pm 50$
  - $n_{II}$ = 10 bis 30

- **Kolonne (III) :**

  - Drücke (in bar effektiv)
    $10^{-4} \leq P_{tIII} \leq 1$, vorzugsweise $10^{-3} \leq P_{tIII} \leq 100.10^{-3}$
    $10^{-4} \leq P_{pIII} \leq 1$, vorzugsweise $10^{-3} \leq P_{pIII} \leq 100.10^{-3}$
  - Temperaturen (°C)
    $35 \leq \Theta_{tIII} \leq 57$, vorzugsweise $35 \leq \Theta_{tIII} \leq 38$
    $63 \leq \Theta_{pIII} \leq 87$, vorzugsweise $63 \leq \Theta_{pIII} \leq 66$
  - $r_{III} = 20 \pm 10$
  - $n_{III}$ = 30 bis 70

**8.** Vorrichtung zur Durchführung des Verfahrens nach irgendeinem der Ansprüche 1 bis 7, **dadurch gekennzeichnet, daß** sie

→ mindestens drei Destillationskolonnen (I, II, III) umfaßt, wobei

Δ die erste für die Beseitigung der schweren Verbindungen vorgesehen ist, insbesondere des Redistributionskatalysators und seines Inhibitors,
Δ die zweite für die Beseitigung der leichten Verbindungen, der Alkyldihydrogenhalogensilane vorgesehen ist, und
Δ die dritte für die Abtrennung zwischen dem angestrebten AHHS und den anderen Produkten vorgesehen ist, die noch in dem eintretenden Destillationsfluß anwesend sind,

→ und dadurch, daß diese Kolonnen mit Mitteln für das Eintragen von mindestens einem Inhibitor ausgestattet sind, der gegenüber den Produkten aktiv ist, die fähig sind, Nebenreaktionen zur Umwandlung des angestrebten AHHS in andere unerwünschte Nebenprodukte zu katalysieren, wobei diese Mittel für das Eintragen vorzugsweise Mittel zum Zuführen des Inhibitors sind, vorteilhafterweise in das Kondensat, das am Kopf der Kolonne I erzeugt wird.

## Claims

**1.** Process for the preparation of alkylmonohydrohalosilanes (AHHSs) which are liable to be subject to a dismutation catalysed by at least one Lewis acid,
this process being of the type of those comprising the following essential stages:

(a) redistribution between at least one first compound of formula (1) : $(R)_a(H)_bSiX_{4-a-b}$, and at least one second compound of formula (2) : $(R')_cSiX_{4-c}$, (1) and (2) being formulae in which:

* a = 0, 1, 2 or 3; b = 1, 2 or 3; c = 1, 2, 3 or 4 and $a + b \leq 3$;
* R and R' are radicals which are identical to and/or different from one another and which are chosen from alkyls and/or aryls (preferably methyl, ethyl, propyl or phenyl);
* the X substituents are identical to or different from one another and correspond to a halogen, preferably Cl,

with the condition according to which at least one X atom is present in at least one of the two compounds of formulae (1) and (2), the said redistribution taking place in the presence of a catalyst chosen from Lewis acids, preferably from metal halides and/or borates and more preferably still from the group consisting of:

$AlCl_3$, $ZrCl_4$, $KAlCl_4$, CuCl, $H_3BO_3$ and $BF_3$;
(b) introduction into the reaction mixture of at least one inhibitor of the redistribution catalyst;
(c) separation and collection, preferably by distillation, of the alkylmonohydrosilanes formed in the crude redistribution reaction mixture (a);

**characterized**

⮝ in that, in the context of the stage (c), the crude reaction mixture is subjected to a distillation treatment involving at least one distillation column,
⮝ and in that it is seen to that, at least in a portion of the distillation circuit, the targeted AHHSs are in the presence of at least one inhibitor of any product capable of behaving as a redistribution catalyst with respect to the said AHHSs.

**2.** Process according to claim 1, **characterized in that** the distillation stage (c) consists essentially in:

($c_1$) employing a line of at least two (I, II, ... N), preferably at least three, distillation columns;
($c_2$) ensuring that the fluid comprising the AHHSs is brought into contact with the inhibitor:

. (i) → by injecting a fluid (preferably a liquid) comprising the inhibitor,

Δ on the one hand, at least into the first column (I) of the distillation line, countercurrentwise with respect to the fluid vapour comprising the AHHSs,
Δ and, on the other hand, into the feed fluid for the second column (II);

. (ii) → and/or by mixing the inhibitor with the feed fluid for at least one of the columns (II to N) of the line, preferably for the column (II);

the alternative form (i) being very particularly used in practice.

**3.** Process according to claim 2, **characterized in that**, in the stage ($c_2$), it is ensured that the fluid comprising the targeted AHHSs is brought into contact with the inhibitor by mixing the latter with the condensate ($D_I$) produced and collected at the top of column (I) and by providing for the reflux $R_I$ of at least a portion of this condensate into this column (I);
the reflux ratio $r_I = R_I/D_I$, with $R_I$ = reflux at the top of column (I) and $D_I$ = distillate at the top of column (I), preferably being adjusted to between 0.5 and 3, preferably between 1.5 and 2.5 and more preferably still to a value of the order of 1.8.

**4.** Process according to any one of claims 1 to 3, **characterized**

◊ **in that** use is made, in the stage ($c_I$), of a line of three distillation columns, respectively:

- a column (I) for tailing the heavy compounds of the crude reaction mixture,
- a column (II) for topping the light compounds of the crude reaction mixture,
- and a column (III) for final separation of the AHHSs;

◊ in that the column (I) is fed with the crude reaction mixture while having taken care to set the pressure parameters ($P_{bI}$, $P_{tI}$) and temperature parameters ($\theta_{bI}$, $\theta_{tI}$) for the bottom and top of the column, number $n_I$ of plates and reflux ratio $r_I$ so that a distillation fraction comprising the targeted AHHS is recovered at the top of column (I),
◊ in that this fraction is condensed into a liquid which is fractionated into a reflux $R_I$ and into a distillate $D_I$;
◊ in that the column (II) is fed with $D_I$ while having taken care to set the pressure parameters ($P_{bII}$, $P_{tII}$) and temperature parameters ($\theta_{bII}$, $\theta_{tII}$) for the bottom and top of the column, number $n_{II}$ of plates and reflux ratio $r_{II}$ so as to produce and collect :

➤ on the one hand, at the top of column (II), a distillation fraction forming the distillate ($D_{II}$) and comprising alkylhydrohalosilanes and alkylsilanes with boiling points which are below that of the targeted AHHS,
➤ and, on the other hand, at the bottom of column (II), a distillation fraction $P_{II}$ comprising the targeted AHHS;

◊ and in that the column (III) is fed with $P_{II}$ while having taken care to set the pressure parameters ($P_{bIII}$, $p_{tIII}$) and temperature parameters ($\theta_{bIII}$, $\theta_{tIII}$) for the bottom and top of the column, number $n_{III}$ of plates and reflux ratio $r_{III}$ so as to produce and collect:

⇨ on the one hand, at the top of the column, a distillate $D_{III}$ composed essentially of the targeted AHHS,
⇨ on the other hand, at the bottom of the column, a distillation fraction forming the bottoms $P_{III}$ comprising alkylhydrohalosilanes and alkylhalosilanes with boiling points which are greater than or equal to that of the targeted AHHS.

**5.** Process according to any one of claims 1 to 4, **characterized in that** the inhibitor is chosen from:

- cyclic polyorganosiloxanes (POS) comprising from 4 to 10 Si atoms, octamethyltetrasiloxane ($D_4$) and decamethylpentasiloxane ($D_5$) being preferred;
- hydroxylated or non-hydroxylated, linear or branched POSs having from 2 to 100 silicon atoms and more preferably still polydimethylsiloxanes with a viscosity of 50 mPa.s and their mixtures;
- optionally alkoxylated POS resins;
- optionally alkoxylated silanes;
- monofunctional or polyfunctional alcohols;
- ketones;
- and their mixtures.

**6.** Process according to any one of claims 1 to 5, **characterized in that** the inhibitor is incorporated in a proportion of at least 0.0001 weight%, preferably between 0.0010 and 0.0100 weight% and more preferably still between 0.0020 and 0.0050 weight% with respect to the amount of AHHS present in the crude reaction mixture before distillation.

**7.** Process according to any one of claims 1 to 6, **characterized in that** the targeted AHHS is dimethylmonohydrochlorosilane,
**in that** three distillation columns (I, II, III) are employed
and **in that** the following distillation parameters are chosen:

- **column (I):**

  - pressures (in actual bars)
    $0.1 \leq P_{tI} \leq 3$, preferably $1 \leq P_{tI} \leq 2$
    $0.1 \leq P_{bI} \leq 3$, preferably $1 \leq P_{bI} \leq 2$
  - temperatures (°C)
    $60 \leq \theta_{tI} \leq 120$, preferably $80 \leq \theta_{tI} \leq 100$
    $90 \leq \theta_{bI} \leq 150$, preferably $110 \leq \theta_{bI} \leq 130$
  - $r_I = 2 \pm 1$
  - $n_I$ = 5 to 15

- **column (II) :**

  - pressures (in actual bars)
    $1 \leq P_{tII} \leq 8$, preferably $4 \leq P_{tII} \leq 5$
    $1 \leq P_{bII} \leq 8$, preferably $4 \leq P_{bII} \leq 5$
  - temperatures (°C)
    $30 \leq \theta_{tII} \leq 85$, preferably $60 \leq \theta_{tII} \leq 70$
    $80 \leq \theta_{bII} \leq 140$, preferably $115 \leq \theta_{bII} \leq 125$
  - $r_{II} = 100 \pm 50$
  - $n_{II}$ = 10 to 30

- **column (III) :**

  - pressures (in actual bars)
    $10^{-4} \leq P_{tIII} \leq 1$, preferably
    $10^{-3} \leq P_{tIII} \leq 100 \times 10^{-3}$

$10^{-4} \leq P_{bIII} \leq 1$, preferably
$10^{-3} \leq P_{bIII} \leq 100 \times 10^{-3}$

- temperatures (°C)
  $35 \leq \theta_{tIII} \leq 57°C$, preferably $35 \leq \theta_{tIII} \leq 38$
  $63 \leq \theta_{bIII} \leq 87°C$, preferably $63 \leq \theta_{bIII} \leq 66$
- $r_{III} = 20 \pm 10$
- $n_{III} = 30$ to 70.

**8.** Device for the implementation of the process according to any one of claims 1 to 7, **characterized:**

→ **in that** it comprises at least three distillation columns (I, II, III),

Δ the first being intended for the tailing, in particular, of the redistribution catalyst and of its inhibitor,
Δ the second being intended for the topping of the alkyldihydrohalosilanes,
Δ and the third for the separation between the targeted AHHS and the other products still present in the entering distillation flow,

→ and in that these columns are equipped with means for incorporation of at least one inhibitor which is active with respect to products capable of catalysing side reactions in which the targeted AHHS is converted into other undesirable byproducts,

these means for incorporation preferably being means for conveying inhibitors, advantageously, into the condensate produced at the top of column (I).

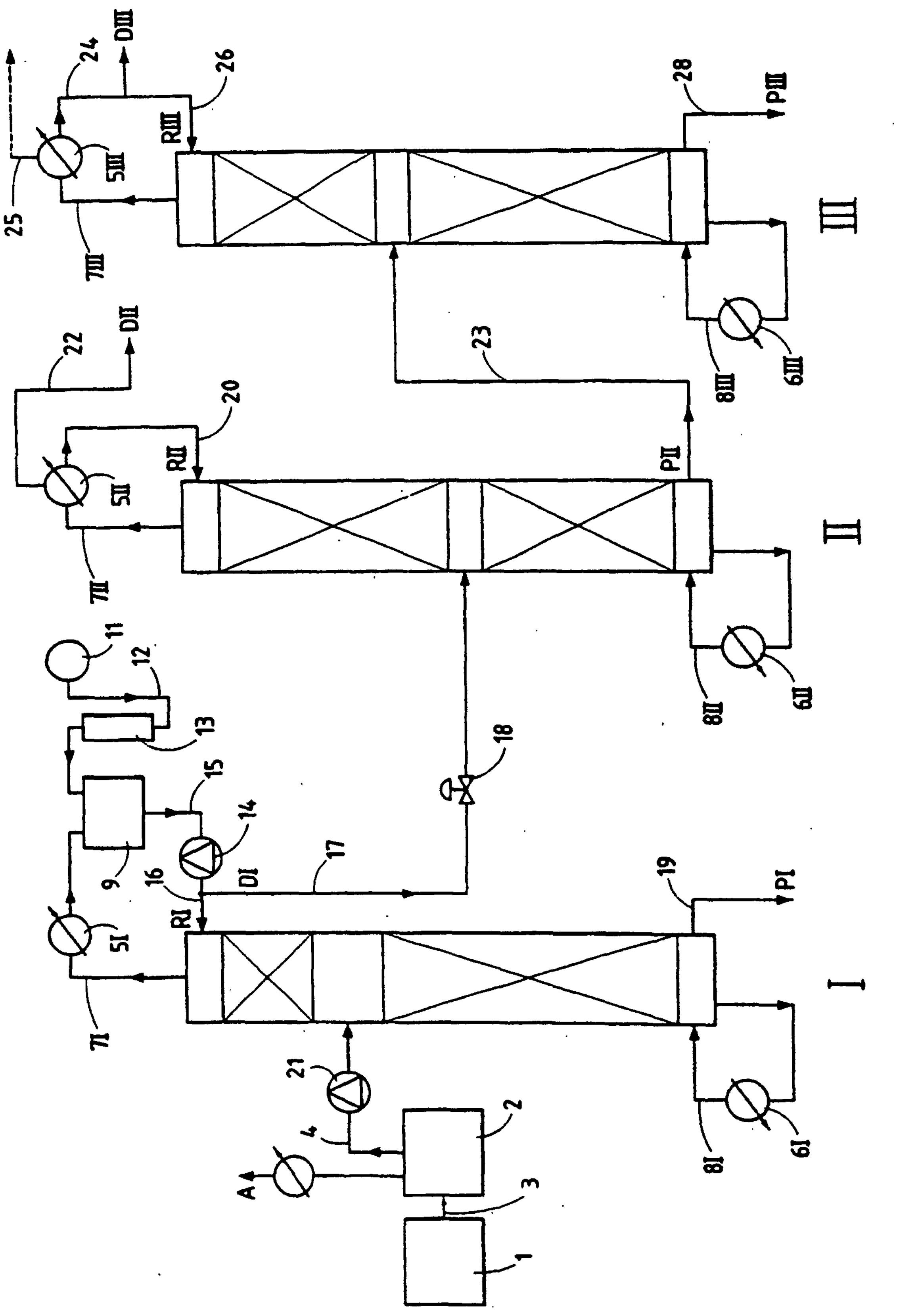
DIII
24
26
25
RIII
5III
7III
28
PIII
III
23
8III
6III
DII
22
20
RII
5II
7II
PII
II
8II
6II
11
12
13
15
14
9
18
16
17
DI
RI
5I
7I
19
PI
I
21
2
4
A
3
1
8I
6I